# EUROPÄISCHE PATENTSCHRIFT

(11) **EP 2 714 785 B1**
(45) Veröffentlichungstag und Bekanntmachung des Hinweises auf die Patenterteilung: **01.02.2017**
(21) Anmeldenummer: 12722725.4
(22) Anmeldetag: 18.05.2012
(51) Int. Cl.: C08J 9/14

(54) **VERKLEBEN VON SUBSTRATEN MITTELS EINES EINKOMPONENTEN-POLYURETHANKLEBERS**
GLUING SUBSTRATES TOGETHER BY MEANS OF A SINGLE-COMPONENT POLYURETHANE ADHESIVE
COLLAGE DE SUBSTRATS AU MOYEN D'UNE COLLE POLYURÉTHANE MONOCOMPOSANT

(30) Priorität: 01.06.2011 DE 102011076861
(43) Veröffentlichungstag der Anmeldung: 09.04.2014
(73) Patentinhaber: Henkel AG & Co. KGaA, 40589 Düsseldorf (DE)
(72) Erfinder: SEBESTIAN, Milan, 41515 Grevenbroich (DE); KOLENDA, Felicitas, 40789 Monheim (DE)
(86) Internationale Anmeldenummer: PCT/EP2012/059276
(87) Internationale Veröffentlichungsnummer: WO 2012/163696

(56) Entgegenhaltungen:
- EP-A2- 2 514 787
- WO-A1-2009/071470
- WO-A2-2011/113587
- CA-A1- 2 155 877

## Beschreibung

Die Erfindung liegt auf dem Gebiet des Verklebens von Substraten, insbesondere von Baumaterialien. Sie betrifft ein Verfahren zum Verkleben von Substraten unter Verwendung eines aus einem Druckbehälter applizierbaren Einkomponenten-Polyurethanklebers, der ein spezielles Treibmittel enthält. Sie betrifft ferner spezielle Einkomponenten-Polyurethankleber zur Verwendung in einem solchen Verfahren.

Der Einsatz von Polyurethan, insbesondere Polyurethanschaum, ist in der Bauindustrie gang und gäbe. In der Regel wird der Polyurethanschaum dabei zum Ausschäumen von Hohlräumen, beispielsweise zwischen Fensterrahmen und der Wandöffnung, oder zum Verschließen von Fugen im Mauerwerk eingesetzt. Im Vordergrund steht dabei die Dämmwirkung des ausgehärteten Polyurethanschaums. Eine klebende Funktion wird, wenn überhaupt, nur in untergeordnetem Maße erwartet. Dementsprechend ist die Polyurethanzubereitung so eingestellt, dass sie sich aus einer üblichen Aerosoldose unter Schaumbildung applizieren lässt, und der resultierende Schaum möglichst stabil ist und ohne nennenswerte Volumenverringerung aushärtet. Vereinzelt wurde auch der Einsatz von Polyurethan als Kleber im Baubereich vorgeschlagen.

So beschreibt US 5,951,796 einen Zweikomponenten-Polyurethankleber mit dem sich verschiedene Baumaterialien miteinander verkleben lassen. Als Beispiele sind das Verkleben von keramischen Fliesen, Asphaltschindeln, Dachdämmplatten und Holzböden genannt. Auch das Verkleben von Dachdichtungsbahnen und Mauersteinen wird erwähnt. Es wird ausdrücklich darauf abgehoben, dass Einkomponenten-Polyurethankleber eine Reihe von Nachteilen aufweisen und daher für die genannten Anwendungen schlecht geeignet sind. Daher wird ein Zweikomponenten-Polyurethankleber vorgeschlagen, wobei die beiden Komponenten des Klebers jeweils einen als weich bezeichneten Fluorkohlenwasserstoff als Treibmittel enthalten. Dieser Zweikomponenten-Polyurethankleber zeichnet sich dadurch aus, dass er beim Auftragen mit einer Konsistenz aufschäumt, die ein Tropfen oder ein Ablaufen vom Substrat verhindert. Durch das Aufschäumen werden Hohlräume und Unregelmäßigkeiten im Substrat ausgefüllt. Der Schaum fällt jedoch in sich zusammen, wenn das zu verklebende Material mit dem Kleber in Kontakt gebracht wird, und der Kleber härtet schnell aus. Nachteilig an diesem Polyurethankleber ist zum einen, dass die getrennte Konfektionierung der beiden Komponenten einen erhöhten Verpackungsaufwand mit sich bringt. Die Komponenten müssen entweder in verschiedenen Behältnissen getrennt verpackt werden, dann ist eine geeignete Mischvorrichtung zum Mischen der Komponenten bei der Anwendung notwendig. Oder sie werden in ein spezielles Behältnis abgefüllt, das zwei getrennte Kammern aufweist, in denen die Komponenten bis zur Anwendung getrennt voneinander aufbewahrt werden. Solche Behältnisse sind vergleichsweise komplex. Zum anderen ist aus heutiger Sicht der Einsatz vieler Fluorkohlenwasserstoffe als Treibmittel äußerst bedenklich, da sie in Verdacht stehen, zum anthropogenen Treibhauseffekt beizutragen. In vielen Ländern ist der Einsatz der meisten Fluorkohlenwasserstoffe daher untersagt oder zumindest stark eingeschränkt.

Aus WO 2008/031791 A2 ist das Verkleben mittels PU-Dosenschaum (PU = Polyurethan) bekannt. Zur Ausbildung einer Klebeschicht wird der PU-Schaum in Form einer Schaumraupe auf einen Klebeuntergrund aufgetragen und fällt dann in sich zusammen. Es verbleibt so nur die gewünschte Klebeschicht, auf die das zu verklebende Teil gedrückt wird. Der PU-Schaum ist so einzustellen, dass er relativ rasch zerfällt. Wie dies konkret zu bewerkstelligen ist, bleibt weitgehend offen. Es wird lediglich ausgeführt, dass das rasche Zerfallen der Schaumstoffraupe insbesondere durch geeignete Kombination der bekannten Stabilisierungselemente und Destabilisierungselemente erreicht werden kann. Es wird also auf den Einsatz von Destabilisierungselementen, auch als Anti-Schaummittel bezeichnet, abgestellt. Als geeignete Destabilisierungselemente werden Zellöffner, organische Polymere und paraffinische Öle genannt. Aufgrund der sehr geringen Stabilität des Schaums zeigen diese Produkte jedoch insbesondere für poröse Substrate und Substrate mit unregelmäßiger Oberfläche ein schlechtes Benetzungsverhalten, so dass der Klebefilm nicht in die Poren eindringt und die resultierende Verklebung nicht optimal ist.

WO 2009/071470 A1 offenbart ein Verfahren zum Verkleben von Substraten, umfassend die Schritte:
- Aufbringen eines Einkomponenten-Polyurethanklebers auf mindestens eines der zu verklebenden Substrate, wobei der Einkomponenten-Polyurethankleber aus einem Druckbehälter in Form eines Schaums appliziert wird, und
- Zusammendrücken der Substrate,
wobei der Polyurethankleber 20 Gew.-% Polyole, 48 Gew.-% eines Polyisocyanats, 0,3 Gew.-% eines Katalysators, 18 Gew.-% eines Treibmittels und 1 Gew.-% eines Schaumstabilisators enthält, und das Treibmittel 29 Gew.% Dimethylether enthält.

Aufgabe der vorliegenden Erfindung war es daher, ein Verfahren zum Verkleben von Substraten mittels eines Polyurethanklebers, mit dem Baumaterialien, insbesondere Dämmmaterialien, wie Mineralfaserplatten, zuverlässig miteinander oder auf üblichen Bauuntergründen verklebt werden können, und dafür geeignete Einkomponenten-Polyurethankleber bereitzustellen. Der Polyurethankleber soll dabei als Schaum auf das zu verklebende Substrat aufgebracht werden können ohne zu tropfen oder vom Substrat abzufließen. Er soll ein gutes Benetzungsverhalten zeigen, so dass vorhandene Hohlräume und Unregelmäßigkeiten im Substrat ausgefüllt werden. Um zu verhindern, dass größere Mengen des Klebers beim Zusammenpressen der zu verklebenden Substrate aus dem Klebespalt herausgedrückt werden, muss der Schaum zudem hinreichend instabil sein, um vor oder beim Zusammenpressen der Substrate in sich zusammenzufallen und den eigentlichen Klebefilm zu bilden.

Es wurde nun gefunden, dass diese Aufgabe durch Verwendung eines aus einem Druckbehälter applizierbaren Einkomponenten-Polyurethanklebers, der ein spezielles Treibmittel enthält, gelöst wird.

Gegenstand der Erfindung ist daher ein Verfahren zum Verkleben von Substraten, umfassend mindestens die Schritte
- Aufbringen eines Einkomponenten-Polyurethanklebers auf mindestens eines der zu verklebenden Substrate, wobei der Einkomponenten-Polyurethankleber mindestens ein Treibmittel, ausgewählt aus Dimethylether und Dimethoxymethan (Methylal) enthält, und aus einem Druckbehälter in Form eines Schaums appliziert wird, und
- anschließendes Zusammendrücken der zu verklebenden Substrate,
dadurch gekennzeichnet, dass
- der Anteil an Dimethylether und Dimethoxymethan, bezogen auf die Gesamtmenge enthaltener Treibmittel, mindestens 90 Gew.-% und bevorzugt 100 Gew.-% beträgt, und
- der Einkomponenten-Polyurethankleber
   - 30 bis 70 Gew.-%, vorzugsweise 30 bis 60 Gew.-% mindestens einer Verbindung mit zwei oder mehreren, gegebenenfalls verkappten, Isocyanat-Gruppen,
   - 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
   - 0,01 bis 2,5 Gew.-%, vorzugsweise 0,02 bis 1,25 Gew.-% mindestens eines Härtungskatalysators,
   - 5 bis 49,99 Gew.-%, vorzugsweise 7 bis 40 Gew.-%, besonders bevorzugt 8 bis 30 Gew.-% mindestens eines Treibmittels, und
   - 0 bis 10 Gew.-%, vorzugsweise 0,5 bis 5 Gew.-% mindestens eines Schaumstabilisators,
jeweils bezogen auf das Gesamtgewicht des Einkomponenten-Polyurethanklebers, enthält.

Durch Einsatz mindestens eines der genannten polaren Treibmittel lässt sich der Polyurethankleber so einstellen, dass er als Schaum auf das zu verklebende Substrat aufgebracht werden kann ohne zu tropfen oder vom Substrat abzufließen, und eine Konsistenz aufweist, die einerseits ein gutes Benetzungsverhalten gewährleistet, so dass vorhandene Hohlräume und Unregelmäßigkeiten im Substrat ausgefüllt werden, und andererseits sicherstellt, dass der Schaum vor oder beim Zusammenpressen der Substrate in sich zusammenfällt und den eigentlichen Klebefilm bildet.

Bevorzugt kommt als Treibmittel Dimethylether und/oder Dimethoxymethan, besonders bevorzugt Dimethylether, zum Einsatz.

Der Anteil an Dimethylether und Dimethoxymethan, bezogen auf die Gesamtmenge enthaltener Treibmittel, beträgt im eingesetzten Einkomponenten-Polyurethankleber mindestens 90 Gew.-% und weiter bevorzugt 100 Gew.-%. Mit anderen Worten enthält der eingesetzte Einkomponenten-Polyurethankleber besonders bevorzugt neben Dimethylether und/oder Dimethoxymethan keine weiteren Treibmittel.

Vorzugsweise beträgt der Anteil an Dimethylether, bezogen auf die Gesamtmenge enthaltener Treibmittel, im eingesetzten Einkomponenten-Polyurethankleber mindestens 50 Gew.-%, vorzugsweise mindestens 70 Gew.-%, besonders bevorzugt mindestens 90 Gew.-% und ganz besonders bevorzugt 100 Gew.-%. Mit anderen Worten enthält der eingesetzte Einkomponenten-Polyurethankleber ganz besonders bevorzugt neben Dimethylether keine weiteren Treibmittel.

Es wird ein Einkomponenten-Polyurethankleber eingesetzt, der
- 30 bis 70 Gew.-%, vorzugsweise 30 bis 60 Gew.-% mindestens einer Verbindung mit zwei oder mehreren, gegebenenfalls verkappten, Isocyanat-Gruppen,
- 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
- 0,01 bis 2,5 Gew.-%, vorzugsweise 0,02 bis 1,25 Gew.-% mindestens eines Härtungskatalysators,
- 5 bis 49,99 Gew.-%, vorzugsweise 7 bis 40 Gew.-%, besonders bevorzugt 8 bis 30 Gew.-% mindestens eines Treibmittels, und
- 0 bis 10 Gew.-%, vorzugsweise 0,5 bis 5 Gew.-% mindestens eines Schaumstabilisators,
jeweils bezogen auf das Gesamtgewicht des Einkomponenten-Polyurethanklebers, enthält. Bezüglich des Treibmittels gelten selbstverständlich obige Ausführungen.

Als "Verbindung mit zwei oder mehreren, gegebenenfalls verkappten, Isocyanat-Gruppen" im Sinne der vorliegenden Erfindung eignen sich insbesondere die für Klebstoffanwendungen bekannten difunktionellen Isocyanate (Diisocyanate), trifunktionellen Isocyanate (Triisocyanate) und/oder Polyisocyanate. Unter "Polyisocyanaten" werden erfindungsgemäß Verbindungen verstanden, die mehr als drei Isocyanatgruppen aufweisen. Diisocyanate und/oder Polyisocyanate sind erfindungsgemäß besonders bevorzugt.

Neben den monomeren Di-, Tri- und/oder Polyisocyanaten zählen auch die oligomeren und/oder polymeren Di-, Tri- und/oder Polyisocyanate (reaktive Präpolymere) zu den erfindungsgemäß einsetzbaren Verbindungen mit zwei oder mehreren, gegebenenfalls verkappten, Isocyanat-Gruppen. Unter einem "Oligomer" wird dabei eine Verbindung mit weniger als 4 Wiederholungseinheiten verstanden. Dementsprechend wird unter einem "Polymer" eine Verbindung mit 4 oder mehr Wiederholungseinheiten verstanden.

Beispiele für geeignete monomere Di- ,Tri- oder Polyisocyanate sind 1,5-Naphthylendiisocyanat, 2,2'-, 2,4- und/oder 4,4'-Diphenylmethandiisocyanat (MDI), hydriertes MDI (H12MDI), Allophanate des MDI, Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanato-ethylester, Trimethylhexamethylendiisocyanat, 1,4-Diisocyanatobutan, 1,12-Diisocyanatododecan, Dimerfettsäurediisocyanat. Besonders geeignet sind aliphatische Isocyanate wie Hexamethylendiisocynat, Undecan-, Dodecamethylendiisocyanat, 2,2,4-Trimethylhexan-2,3,3-Trimethylhexamethylen, 1,3- oder 1,4-Cyclohexandiisocynat-, 1,3- oder 1,4-Tetramethylxyloldiisocynat, Isophorondiisocynat, 4,4-Dicyclohexylmethan-, Lysinesterdiisocyanat oder Tetramethylxylylendiisocyanat (TMXDI). In dieser Gruppe können die aliphatischen Diisocyanate besonders bevorzugt sein.

Difunktionelle Isocyanate sind bevorzugt. Trifunktionelle Isocyanate können jedoch zumindest anteilig mit verwendet werden. Als trifunktionelle Isocyanate geeignet sind Isocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen. Zur Herstellung von Trimeren geeignete Isocyanate sind die bereits oben genannten Diisocyanate, wobei die Trimerisierungsprodukte von HDI, TMXDI oder IPDI besonders bevorzugt sind.

Weiterhin erfindungsgemäß bevorzugt sind die polymeren Di-, Tri- oder Polyisocyanate, wie insbesondere das polymere MDI, sowie Mischungen von polymeren Di-, Tri- oder Polyisocyanaten mit monomeren Di-,Tri- oder Polyisocyanaten.

Besonders bevorzugt ist erfindungsgemäß der Einsatz von Gemischen monomerer Diisocyanate und polymerer Di-, Tri- oder Polyisocyanate, insbesondere solcher Gemische, die kommerziell unter der Bezeichnung technisches MDI erhältlich sind.

Besonders bevorzugt sind erfindungsgemäß weiterhin Verbindungen mit zwei oder mehreren Isocyanat-Gruppen, die eine Polyetherstruktur aufweisen. Isocyanat-Gruppen-haltige Derivate von Polyethylenglykol, Polypropylenglykol und/oder Polytetrahydrofuran sind erfindungsgemäß besonders bevorzugt.

Weiterhin hat es sich als vorteilhaft erwiesen, wenn die Verbindungen mit zwei oder mehreren Isocyanat-Gruppen ein mittleres Molekulargewicht von kleiner 5000 g/mol, insbesondere kleiner als 3000 g/mol aufweisen. Verbindungen mit zwei oder mehreren Isocyanat-Gruppen mit einem mittleren Molekulargewicht von mehr als 150 g/mol, insbesondere von mehr als 250 g/mol sind ebenfalls bevorzugt.

Alle Angaben von Molekulargewichtsmitteln im Rahmen der vorliegenden Anmeldung verstehen sich als gewichtsmittleres Molekulargewicht (M_{w}), welches mittels Gelpermeationschromatographie (GPC) mit Polystyrol als Standard bestimmt wird.

Verbindungen mit zwei oder mehreren Isocyanat-Gruppen mit einem Isocyanatäquivalenzgewicht von 80 g/eq bis 2000 g/eq, insbesondere von 125 g/eq bis zu 1000 g/eq haben sich hinsichtlich ihrer Reaktivität als erfindungsgemäß bevorzugt erwiesen.

Die Verbindungen mit zwei oder mehreren Isocyanat-Gruppen können die Isocyanat-Gruppen auch in verkappter Form enthalten. Die Verkappung lässt sich beispielsweise durch Umsetzung mit abspaltbaren Verkappungsgruppen erzeugen.

Als abspaltbare Verkappungsgruppen werden vorzugsweise H-acide Verbindungen eingesetzt. Die H-aciden Verbindungen weisen vorzugsweise funktionelle Gruppen ausgewählt aus Hydroxygruppen, sekundären Aminogruppen sowie CH-aciden Gruppen auf. Besonders bevorzugte Verkappungsgruppen sind niedere aliphatische Monoalkohole wie Methanol, Ethanol, Propanol, Butanol oder Octylalkohol, Monoether von Ethylenglykol und/oder Diethylenglykol, aromatische Hydroxy-Verbindungen wie Phenol, Alkylphenole oder (Alkyl)cresole, 3,5-Dimethylpyrazol, Phenol, sekundäre Amine, Butanoxim, Malonester und Acetoacetat sowie deren Derivate. Weiterhin können Oxime als Blockierungsmittel eingesetzt werden wie Acetonoxim, Methylethylketonoxim und ähnliche. Aus der Reihe der Lactam-Blockierungen sei insbesondere das ε-Caprolactam genannt; weiterhin kommen CH-acide β-Dicarbonylverbindungen wie Malonester als Blockierungsmittel in Frage.

Als Verbindung, die mindestens zwei Hydroxygruppen aufweist, können Diole und/oder Polyole eingesetzt werden.

Es eignen sich beispielsweise die aus der Polyurethan-Technologie bekannten Polyole mit einem mittleren Molekulargewicht bis 50000 g/mol. Sie können beispielsweise auf Basis von Polyethern, Polyestern, Polyolefinen, Polyacrylaten oder Polyamiden ausgewählt werden, wobei diese Polymere zusätzlich OH-Gruppen aufweisen müssen. Beispielsweise sind di- oder trifunktionelle Polyethylenpolyetherpolyole geeignet.

Geeignete Polyetherpolyole sind beispielsweise lineare oder verzweigte Polyether, die eine Mehrzahl von Etherbindungen aufweisen und die zumindest zwei Alkoholgruppen enthalten, vorzugsweise an den Kettenenden. Sie enthalten im Wesentlichen keine anderen funktionellen Gruppen als die OH-Gruppen. Solche Polyetherpolyole entstehen als Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, wie 1,2-Butandiol, 1,3-Butandiol, 1,4-Butandiol und 2,3-Butandiol, Pentandiolen und Hexandiolen, 2,2-Dimethyl-1,3-propandiol, 2-Methylpropandiol, Polyglycerol, 1,6-Hexandiol, 2,4,4-Trimethylhexandiol-1,6, 2,2,4- Trimethylhexandiol-1,6, 1,4-Cyclohexandimethanol, oder aromatischen Diolen, wie 4,4'-Dihydroxydiphenylpropan, Bisphenol A, Bisphenol F, Brenzkatechin, Resorcin, Hydrochinon oder Gemischen aus zwei oder mehr davon. Weitere, im Rahmen der Erfindung geeignete Polyole entstehen durch Polymerisation von Tetrahydrofuran (Poly-THF). Ferner sind auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet. Sie weisen dieselbe Anzahl endständiger OH-Gruppen auf, wie der Ausgangsalkohol.

Anstelle der oder zusammen mit den Polyetherpolyolen können auch Polyesterpolyole eingesetzt werden. Diese entstehen durch eine Polykondensationsreaktion eines mehrwertigen Alkohols mit beispielsweise 2 bis 15 C-Atomen und vorzugsweise 2 oder 3 OH-Gruppen mit einer oder mehreren Polycarbonsäuren, vorzugsweise solchen mit 2 bis 14 C-Atomen (einschließlich der C-Atome der Carboxylgruppen) und mit 2 bis 6 Carboxylgruppen. Dabei sind Dicarbonsäuren bevorzugt, die zusammen mit Diolen zu linearen Polyesterdiolen oder mit Triolen zu verzweigten Polyestertriolen führen. Umgekehrt lassen sich verzweigte Polyestertriole auch durch Umsetzung eines Diols mit einer Tricarbonsäure erhalten. Als Alkoholkomponente des Polyesterpolyols können beispielsweise verwendet werden: Ethylenglykol, 1,2-Propandiol, 1,3-Propandiol, die isomeren Butandiole, Pentandiole, Hexandiole, 2,2-Dimethyl-1,3-propandiol, 2-Methylpropandiol, 1,6-Hexandiol, 2,4,4-Trimethylhexandiol-1,6, 2,2,4-Trimethylhexandiol-1,6, Cyclohexandiol-1,4, 1,4-Cyclohexandimethanol, oder aromatische Diole, wie 4,4'-Dihydroxy-diphenylpropan, Bisphenol A, Bisphenol F, Brenzkatechin, Resorcin, Hydrochinon. Geeignete Carbonsäuren sind beispielsweise: Phthalsäure, Isophthalsäure, Terephthalsäure, Maleinsäure, Dodecylmaleinsäure, Octadecenylmaleinsäure, Fumarsäure, Akonitsäure, 1,2,4-Benzoltricarbonsäure, 1,2,3-Propantricarbonsäure, Malonsäure, Bernsteinsäure, Glutarsäure, Adipinsäure, Pimelinsäure, Sebacinsäure, Cyclohexan-1,2-Dicarbonsäure, 1,4-Cyclohexadien-1,2-dicarbonsäure und weitere. Anstelle der Carbonsäuren können auch deren Anhydride eingesetzt werden.

Wegen des besonders geeigneten Vernetzungsverhaltens ist es bevorzugt, Diisocyanate in Kombination mit trifunktionellen Polyolen und/oder aliphatischen Diolen einzusetzen. Polyethylenpolyetherpolyole, Polypropylenpolyetherpolyole und/oder Butandiole, insbesondere 1,4-Butandiol, können ganz besonders bevorzugte Vertreter der Gruppe der Di- oder Polyole sein.

Vorzugsweise kommt als Verbindung, die mindestens zwei Hydroxygruppen aufweist, eine Verbindung mit Polyetherstruktur zum Einsatz. Dies sind beispielsweise die entsprechenden Derivate von Polyethylenglykol, Polypropylenglykol und/oder Polytetrahydrofuran.

Weiterhin hat es sich als vorteilhaft erwiesen, wenn die Verbindung, die mindestens zwei Hydroxygruppen aufweist, ein Molekulargewichtsmittel von weniger als 4000 g/mol, vorzugsweise von weniger als 2000 g/mol aufweist. Verbindungen, die ein mittleres Molekulargewicht von mindestens 60 g/mol, insbesondere mindestens 90 g/mol sind erfindungsgemäß besonders bevorzugt.

Das Verhältnis von Isocyanat-Äquivalenzgewicht zu Hydroxyäquivalenzgewicht liegt erfindungsgemäß vorzugsweise im Bereich von 1 : 5 bis 1 : 1.

Als Härtungskatalysator kommen Katalysatoren in Frage, die die Umsetzung der Isocyanatgruppen der Verbindung mit zwei oder mehreren, gegebenenfalls verkappten, Isocyanat-Gruppen mit den Hydroxygruppen der Verbindung, die mindestens zwei Hydroxygruppen aufweist, unter Ausbildung einer Urethangruppe katalysieren. Beispielsweise sind hierfür Dialkylzinn-Dicarboxylate geeignet, wie beispielsweise Dibutylzinn-Dicarboxylate. Die Carboxylat-Gruppen können ausgewählt werden aus solchen mit insgesamt (also einschließlich der Carboxylgruppe) 2 bis 18 C-Atomen. Als Carbonsäuren zur Bildung der Carboxylate geeignet sind beispielsweise Essigsäure, Propionsäure, Buttersäure, Valeriansäure, Capronsäure, Caprylsäure, Caprinsäure, Laurinsäure, Palmitinsäure und Stearinsäure. Insbesondere ist Dibutylzinn-Dilaurat (DBTL) geeignet. Des Weiteren können metallorganische Verbindungen auf Basis Bismuth und Zink wie z. B. Bismuth-Zink-Neodecanoat oder aber rein organische Härtungskatalysatoren wie N,N-Dimethylbenzylamin, N,N-Dimethylcyclohexylamin, N,N-Dimethylaminoethoxyethanol, N,N,N',N",N"-Pentamethyldiethylentriamin, 1,3,5-Tris(3-[dimethylamino]propyl)-hexahydro-s-triazin, 2,2'-Dimorpholinodiethylether (DMDEE) oder Diazabicyclooctan verwendet werden. Bevorzugte Härtungskatalysatoren sind Dibutylzinn-Dilaurat (DBTL) und 2,2'-Dimorpholinodiethylether (DMDEE).

Geeignete Schaumstabilisatoren sind beispielsweise silikon-basierte Polymere, beispielsweise Polyether-polylsiloxan-Copolymere, insbesondere Polyalkylenoxid-polydimethylsiloxan-Copolymere.

Es ist jedoch auch möglich, silikonfreie Schaumstabilisatoren einzusetzen. Darunter werden Stoffe verstanden, welche die Ausbildung einer regelmäßigen Zellstruktur bei der Schaumbildung fördern und keine Siliziumatome aufweisen. Beispielsweise seien genannt: Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A. Als Alkoxylierungsreagenzien können beispielsweise Ethylenoxid, Propylenoxid, Poly-THF sowie höhere Homologe verwendet werden. Weiterhin können als siliconfreie Stabilisatoren beispielsweise eingesetzt werden: Alkoxylierungsprodukte von alkylierten Piperidinen, alkylierten Piperazinen, alkylierten Indolen und ähnlichen. Bevorzugte silikonfreie Schaumstabilisatoren sind alkoxylierte Kondensationsprodukte aus Alkylphenol und Formaldehyd, bevorzugt alkoxylierte Kondensationsprodukte aus Nonylphenol und Formaldehyd.

Bevorzugt kommen erfindungsgemäß jedoch als Schaumstabilisatoren silikon-basierte Polymere zum Einsatz, besonders bevorzugt Polyalkylenoxid-polydimethylsiloxan-Copolymere.

Ein erfindungsgemäßes Verfahren, wie zuvor beschrieben, wobei der Einkomponenten Polyurethankleber
- 30 bis 70 Gew.-%, vorzugsweise 30 bis 60 Gew.-% mindestens einer Verbindung mit zwei oder mehreren, gegebenenfalls verkappten, Isocyanat-Gruppen,
- 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
- 0,01 bis 2,5 Gew.-%, vorzugsweise 0,02 bis 1,25 Gew.-% mindestens eines Härtungskatalysators,
- 5 bis 49,99 Gew.-%, vorzugsweise 7 bis 40 Gew.-%, besonders bevorzugt 8 bis 30 Gew.-% mindestens eines Treibmittels, und
- 0 bis 10 Gew.-%, vorzugsweise 0,5 bis 5 Gew.-% mindestens eines Polyether-polylsiloxan-Copolymeren, insbesondere Polyalkylenoxid-polydimethylsiloxan-Copolymeren,
jeweils bezogen auf das Gesamtgewicht des Einkomponenten-Polyurethanklebers, enthält, entspricht einer bevorzugten Ausführungsform der Erfindung.

In einer besonderen Ausführungsform des erfindungsgemäßen Verfahrens wird ein Einkomponenten-Polyurethankleber eingesetzt, der ausschließlich die oben genannten Inhaltsstoffe enthält.

Es ist jedoch prinzipiell möglich, Einkomponenten-Polyurethankleber einzusetzen, die neben den oben genannten Inhaltsstoffen die für Einkomponenten-Polyurethanzubereitungen üblichen weiteren Hilfs- und/oder Zusatzstoffe enthalten. Für diesen Fall ist es bevorzugt, dass der Einkomponenten-Polyurethankleber keinen Zellöffner enthält. Zellöffner im Sinne dieser Erfindung sind Silikonöle, ausgenommen Polyether-polylsiloxan-Copolymere, insbesondere ausgenommen Polyalkylenoxid-polydimethylsiloxan-Copolymere. Ein Zellöffner im Sinne dieser Erfindung ist insbesondere Poly(dimethylsiloxan), beispielsweise Baysilone M100 der Firma Bayer. Polyether-polylsiloxan-Copolymere, insbesondere Polyalkylenoxid-polydimethylsiloxan-Copolymere, sind Schaumstabilisatoren und keine Zellöffner.

Weiterhin ist bevorzugt, dass der Anteil an weiteren Hilfs- und/oder Zusatzstoffen in Summe bei maximal 10 Gew.-%, bezogen auf das Gesamtgewicht des Einkomponenten-Polyurethanklebers liegt, besonders bevorzugt bei maximal 5 Gew.-% und ganz besonders bevorzugt bei maximal 1 Gew.-%.

Geeignete weiteren Hilfs- und/oder Zusatzstoffe sind beispielsweise Kettenverlängerer, Emulgatoren, Tenside, Netzmittel, Haftvermittler, Alterungsschutzmittel, Stabilisatoren und/oder Farbpigmente.

Geeignete Kettenverlängerer sind beispielsweise kurzkettige Diole und Triole. Beispielsweise seien Ethylenglykol, 1,2-Propandiol, 1,3-Propandiol, 1,2-Butandiol, 1,3-Butandiol und 1,4-Butandiol genannt.

Erfindungsgemäß wird der Einkomponenten-Polyurethankleber aus einem Druckbehälter in Form eines Schaums appliziert. Dazu ist der Einkomponenten-Polyurethankleber in einem geeigneten Druckbehälter konfektioniert. Als Druckbehälter können die auf dem Gebiet der Polyurethanschäume üblichen Aerosoldosen zum Einsatz kommen. Vorzugsweise wird der Einkomponenten-Polyurethankleber daher aus einer Aerosoldose auf mindestens eines der zu verklebenden Substrate aufgebracht.

Nach dem Aufbringen des Einkomponenten-Polyurethanklebers werden die zu verklebenden Sustrate zusammengedrückt. Vorzugsweise wird zwischen Beendigung des Aufbringens des Einkomponenten-Polyurethanklebers auf mindestens eines der zu verklebenden Substrate und anschließendes Zusammendrücken der zu verklebenden Substrate 1 Sekunde bis 30 Minuten, vorzugsweise 2 Sekunden bis 15 Minuten, besonders bevorzugt 5 Sekunden bis 5 Minuten gewartet.

Mit dem erfindungsgemäßen Verfahren lässt sich eine Vielzahl unterschiedlicher Substrate miteinander verkleben. Vorzugsweise handelt es sich bei den Substraten jedoch um Baumaterialien, vorzugsweise Dämmmaterialien, besonders bevorzugt Mineralfaserplatten. Diese werden vorzugsweise miteinander oder auf üblichen Bauuntergründen, wie Betonflächen, Gips- oder Zementputzen, Dichtbahnen auf Polymer- oder Bitumenbasis usw. verklebt. Insbesondere beim Verkleben von Mineralfaserplatten kommen die Vorteile des erfindungsgemäßen Verfahrens zum Tragen. Die Oberfläche der Mineralfaserplatten ist vergleichsweise rau und weist eine Vielzahl kleiner Vertiefungen und Hohlräume auf. Um Mineralfaserplatten zuverlässig verkleben zu können, kommt es entscheidend darauf an, dass diese raue Oberfläche gut von dem eingesetzten Kleber benetzt wird. Dies ist bei der erfindungsgemäßen Verwendung des Einkomponenten-Polyurethanklebers, enthaltend ein spezielles Treibmittel der Fall. Ein weiterer Gegenstand der vorliegenden Erfindung sind Einkomponenten-Polyurethankleber zur Verwendung im erfindungsgemäßen Verfahren, enthaltend
- 30 bis 70 Gew.-%, vorzugsweise 30 bis 60 Gew.-% mindestens einer Verbindung mit zwei oder mehreren, gegebenenfalls verkappten, Isocyanat-Gruppen,
- 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
- 0,01 bis 2,5 Gew.-%, vorzugsweise 0,02 bis 1,25 Gew.-% mindestens eines Härtungskatalysators,
- 5 bis 49,99 Gew.-%, vorzugsweise 7 bis 40 Gew.-%, besonders bevorzugt 8 bis 30 Gew.-% mindestens eines Treibmittels, und
- 0 bis 10 Gew.-%, vorzugsweise 0,5 bis 5 Gew.-% mindestens eines Schaumstabilisators,
jeweils bezogen auf das Gesamtgewicht des Einkomponenten-Polyurethanklebers, wobei der Anteil an Dimethylether und Dimethoxymethan, bezogen auf die Gesamtmenge enthaltener Treibmittel, mindestens 90 Gew.-% und ganz besonders bevorzugt 100 Gew.-% beträgt.

Bezüglich dieses Gegenstandes der vorliegenden Erfindung gilt mutatis mutandis das bereits zu dem erfindungsgemäßen Verfahren Gesagte.

Inbesondere bevorzugt einsetzbar ist ein Einkomponenten-Polyurethankleber zur Verwendung in einem Verfahren, enthaltend
- 30 bis 70 Gew.-%, vorzugsweise 30 bis 60 Gew.-% mindestens einer Verbindung mit zwei oder mehreren, gegebenenfalls verkappten, Isocyanat-Gruppen,
- 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
- 0,01 bis 2,5 Gew.-%, vorzugsweise 0,02 bis 1,25 Gew.-% mindestens eines Härtungskatalysators,
- 5 bis 49,99 Gew.-%, vorzugsweise 7 bis 40 Gew.-%, besonders bevorzugt 8 bis 30 Gew.-% mindestens eines Treibmittels, und
- 0 bis 10 Gew.-%, vorzugsweise 0,5 bis 5 Gew.-% mindestens eines Polyether-polylsiloxan-Copolymeren, insbesondere Polyalkylenoxid-polydimethylsiloxan-Copolymern,
jeweils bezogen auf das Gesamtgewicht des Einkomponenten-Polyurethanklebers, wobei der Anteil an Dimethylether und Dimethoxymethan, bezogen auf die Gesamtmenge enthaltener Treibmittel, mindestens 90 Gew.-% und ganz besonders bevorzugt 100 Gew.-% beträgt.

Insbesondere beträgt im erfindungsgemäßen Einkomponenten-Polyurethankleber der Anteil an Dimethylether, bezogen auf die Gesamtmenge enthaltener Treibmittel, vorzugsweise mindestens 50 Gew.-%, vorzugsweise mindestens 70 Gew.-%, besonders bevorzugt mindestens 90 Gew.-% und ganz besonders bevorzugt 100 Gew.-%.

Insbesondere enthält der erfindungsgemäße Einkomponenten-Polyurethankleber keinen Zellöffner, insbesondere keine Silikonöle, ausgenommen Polyether-polylsiloxan-Copolymere, insbesondere ausgenommen Polyalkylenoxid-polydimethylsiloxan-Copolymere.

Im Folgenden wird die Erfindung anhand von Beispielen näher erläutert, wobei die Beispiele lediglich der Illustration der Erfindung dienen und keine Einschränkung des Erfindungsgedankens darstellen.

### Beispiele:

Bei den im Folgenden angegebenen Mengenangaben handelt es sich - soweit nichts anderes vermerkt ist - um Gewichtsprozent.

### Beispiel 1:

Aus den in Tabelle 1 aufgeführten Rohstoffen wurde ein Einkomponenten-Polyurethankleber hergestellt:

**Tabelle 1:**

| Rohstoffe | B1 |
|---|---|
| Polyetherpolyol (Polypropylenglykol mit einem mittleren Molekulargewicht von ca. 1000 g/mol) | 35,4 |
| Polyalkylenoxid-dimethylsiloxan-copolymer | 1,5 |
| 2,2'-Dimorpholinodiethylether | 0,1 |
| MDI technisch (4,4'-Methylenbis(phenylisocyanat)) | 49 |
| Dimethylether | 14 |

Die Rohstoffe wurden mit Ausnahme des Treibmittels Dimethylether vermischt, in Aerosoldosen abgefüllt und die Aerosoldosen druckdicht verschlossen. Anschließend wurden die Aerosoldosen mit der entsprechenden Menge Treibgas beaufschlagt. Bei Applikation des Einkomponenten-Polyurethanklebers aus der Aerosoldose auf ein zu verklebendes Substrat tritt der Kleber in Schaumform aus der Aerosoldose aus und benetzt das Substrat zuverlässig. Nach kurzer Wartezeit wird das Substrat nach Wunsch auf ein weiteres Substrat oder einen Bauuntergrund gedrückt und dabei mit diesem verklebt.

## Patentansprüche

1. Verfahren zum Verkleben von Substraten, umfassend mindestens die Schritte
- Aufbringen eines Einkomponenten-Polyurethanklebers auf mindestens eines der zu verklebenden Substrate, wobei der Einkomponenten-Polyurethankleber mindestens ein Treibmittel, ausgewählt aus Dimethylether und Dimethoxymethan enthält, und aus einem Druckbehälter in Form eines Schaums appliziert wird, und
- anschließendes Zusammendrücken der zu verklebenden Substrate,
**dadurch gekennzeichnet, dass**
- der Anteil an Dimethylether und Dimethoxymethan, bezogen auf die Gesamtmenge enthaltener Treibmittel, mindestens 90 Gew.-% und bevorzugt 100 Gew.-% beträgt, und
- der Einkomponenten-Polyurethankleber
• 30 bis 70 Gew.-%, vorzugsweise 30 bis 60 Gew.-% mindestens einer Verbindung mit zwei oder mehreren, gegebenenfalls verkappten, Isocyanat-Gruppen,
• 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
• 0,01 bis 2,5 Gew.-%, vorzugsweise 0,02 bis 1,25 Gew.-% mindestens eines Härtungskatalysators,
• 5 bis 49,99 Gew.-%, vorzugsweise 7 bis 40 Gew.-%, besonders bevorzugt 8 bis 30 Gew.-% mindestens eines Treibmittels, und
• 0 bis 10 Gew.-%, vorzugsweise 0,5 bis 5 Gew.-% mindestens eines Schaumstabilisators,
jeweils bezogen auf das Gesamtgewicht des Einkomponenten-Polyurethanklebers, enthält.

2. Verfahren nach Anspruch 1, **dadurch gekennzeichnet, dass** der Anteil an Dimethylether, bezogen auf die Gesamtmenge enthaltener Treibmittel, mindestens 50 Gew.-%, vorzugsweise mindestens 70 Gew.-%, besonders bevorzugt mindestens 90 Gew.-% und ganz besonders bevorzugt 100 Gew.-% beträgt.

3. Verfahren nach einem oder mehreren der Ansprüche 1 bis 2, **dadurch gekennzeichnet, dass** der Einkomponenten-Polyurethankleber
- 30 bis 70 Gew.-%, vorzugsweise 30 bis 60 Gew.-% mindestens einer Verbindung mit zwei oder mehreren, gegebenenfalls verkappten, Isocyanat-Gruppen,
- 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
- 0,01 bis 2,5 Gew.-%, vorzugsweise 0,02 bis 1,25 Gew.-% mindestens eines Härtungskatalysators,
- 5 bis 49,99 Gew.-%, vorzugsweise 7 bis 40 Gew.-%, besonders bevorzugt 8 bis 30 Gew.-% mindestens eines Treibmittels, und
- 0 bis 10 Gew.-%, vorzugsweise 0,5 bis 5 Gew.-% mindestens eines Polyether-polylsiloxan-Copolymeren, insbesondere Polyalkylenoxid-polydimethylsiloxan-Copolymeren,
jeweils bezogen auf das Gesamtgewicht des Einkomponenten-Polyurethanklebers, enthält.

4. Verfahren nach einem oder mehreren der Ansprüche 1 bis 2, **dadurch gekennzeichnet, dass** der Einkomponenten-Polyurethankleber keinen Zellöffner, insbesondere keine Silikonöle, ausgenommen Polyether-polylsiloxan-Copolymere, insbesondere ausgenommen Polyalkylenoxid-polydimethylsiloxan-Copolymere, enthält.

5. Verfahren nach einem oder mehreren der Ansprüche 1 bis 3, **dadurch gekennzeichnet, dass** der Einkomponenten-Polyurethankleber aus den genannten Inhaltsstoffen besteht.

6. Verfahren nach einem oder mehreren der Ansprüche 1 bis 5, **dadurch gekennzeichnet, dass** zwischen Beendigung des Aufbringens des Einkomponenten-Polyurethanklebers auf mindestens eines der zu verklebenden Substrate und anschließendes Zusammendrücken der zu verklebenden Substrate 1 Sekunde bis 30 Minuten, vorzugsweise 2 Sekunden bis 15 Minuten, besonders bevorzugt 5 Sekunden bis 5 Minuten gewartet wird.

7. Einkomponenten-Polyurethankleber zur Verwendung in einem Verfahren nach einem oder mehreren der Ansprüche 1 bis 6, enthaltend
- 30 bis 70 Gew.-%, vorzugsweise 30 bis 60 Gew.-% mindestens einer Verbindung mit zwei oder mehreren, gegebenenfalls verkappten, Isocyanat-Gruppen,
- 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
- 0,01 bis 2,5 Gew.-%, vorzugsweise 0,02 bis 1,25 Gew.-% mindestens eines Härtungskatalysators,
- 5 bis 49,99 Gew.-%, vorzugsweise 7 bis 40 Gew.-%, besonders bevorzugt 8 bis 30 Gew.-% mindestens eines Treibmittels, und
- 0 bis 10 Gew.-%, vorzugsweise 0,5 bis 5 Gew.-% mindestens eines Schaumstabilisators,
jeweils bezogen auf das Gesamtgewicht des Einkomponenten-Polyurethanklebers, wobei der Anteil an Dimethylether und Dimethoxymethan, bezogen auf die Gesamtmenge enthaltener Treibmittel, mindestens 90 Gew.-% und bevorzugt 100 Gew.-% beträgt.

8. Einkomponenten-Polyurethankleber nach Anspruch 7, enthaltend
- 30 bis 70 Gew.-%, vorzugsweise 30 bis 60 Gew.-% mindestens einer Verbindung mit zwei oder mehreren, gegebenenfalls verkappten, Isocyanat-Gruppen,
- 20 bis 60 Gew.-%, vorzugsweise 25 bis 60 Gew.-%, besonders bevorzugt 30 bis 60 Gew.-% mindestens einer Verbindung, die mindestens zwei Hydroxygruppen aufweist,
- 0,01 bis 2,5 Gew.-%, vorzugsweise 0,02 bis 1,25 Gew.-% mindestens eines Härtungskatalysators,
- 5 bis 49,99 Gew.-%, vorzugsweise 7 bis 40 Gew.-%, besonders bevorzugt 8 bis 30 Gew.-% mindestens eines Treibmittels, und
- 0 bis 10 Gew.-%, vorzugsweise 0,5 bis 5 Gew.-% mindestens eines Polyether-polylsiloxan-Copolymeren, insbesondere Polyalkylenoxid-polydimethylsiloxan-Copolymern,
jeweils bezogen auf das Gesamtgewicht des Einkomponenten-Polyurethanklebers, wobei der Anteil an Dimethylether und Dimethoxymethan, bezogen auf die Gesamtmenge enthaltener Treibmittel, mindestens 90 Gew.-% und bevorzugt 100 Gew.-% beträgt.

9. Einkomponenten-Polyurethankleber nach Anspruch 7 oder 8, **dadurch gekennzeichnet, dass** der Anteil an Dimethylether, bezogen auf die Gesamtmenge enthaltener Treibmittel, mindestens 90 Gew.-% und bevorzugt 100 Gew.-% beträgt.

10. Einkomponenten-Polyurethankleber nach einem oder mehreren der Ansprüche 7 bis 9, **dadurch gekennzeichnet, dass** der Einkomponenten-Polyurethankleber keinen Zellöffner, insbesondere keine Silikonöle, ausgenommen Polyether-polylsiloxan-Copolymere, insbesondere ausgenommen Polyalkylenoxid-polydimethylsiloxan-Copolymere, enthält.

11. Einkomponenten-Polyurethankleber nach einem oder mehreren der Ansprüche 7 bis 9, **dadurch gekennzeichnet, dass** der Einkomponenten-Polyurethankleber aus den genannten Inhaltsstoffen besteht.

## Claims

1. A method for bonding substrates, comprising at least the steps of
- applying a single-component polyurethane adhesive to at least one of the substrates to be bonded, the single-component polyurethane adhesive containing at least one propellant which is selected from dimethyl ether and dimethoxymethane and being dispensed out of a pressurized container as a foam, and
- subsequently pressing together the substrates to be bonded,
**characterized in that**
- the proportion of dimethyl ether and dimethoxymethane, based on the total amount of propellant contained, is at least 90 % by weight, preferably 100 % by weight, and
- the single-component polyurethane adhesive contains
• 30 to 70 % by weight, preferably 30 to 60 % by weight, of at least one compound comprising two or more, optionally masked, isocyanate groups,
• 20 to 60 % by weight, preferably 25 to 60 % by weight, particularly preferably 30 to 60 % by weight, of at least one compound comprising at least two hydroxy groups,
• 0.01 to 2.5 % by weight, preferably 0.02 to 1.25 % by weight, of at least one curing catalyst,
• 5 to 49.99 % by weight, preferably 7 to 40 % by weight, particularly preferably 8 to 30 % by weight, of at least one propellant, and
• 0 to 10 % by weight, preferably 0.5 to 5 % by weight, of at least one foam stabilizer,
in each case based on the total weight of the single-component polyurethane adhesive.

2. The method according to claim 1, **characterized in that** the proportion of dimethyl ether, based on the total amount of propellant contained, is at least 50 % by weight, preferably at least 70 % by weight, particularly preferably at least 90 % by weight, and more particularly preferably 100 % by weight.

3. The method according to one or more of claims 1 to 2, **characterized in that** the single-component polyurethane adhesive contains
- 30 to 70 % by weight, preferably 30 to 60 % by weight, of at least one compound comprising two or more, optionally masked, isocyanate groups,
- 20 to 60 % by weight, preferably 25 to 60 % by weight, particularly preferably 30 to 60 % by weight, of at least one compound comprising at least two hydroxy groups,
- 0.01 to 2.5 % by weight, preferably 0.02 to 1.25 % by weight, of at least one curing catalyst,
- 5 to 49.99 % by weight, preferably 7 to 40 % by weight, particularly preferably 8 to 30 % by weight, of at least one propellant, and
- 0 to 10 % by weight, preferably 0.5 to 5 % by weight, of at least one polyether polysiloxane copolymer, in particular a polyalkylene oxide polydimethylsiloxane copolymer,
in each case based on the total weight of the single-component polyurethane adhesive.

4. The method according to one or more of claims 1 to 2, **characterized in that** the single-component polyurethane adhesive does not contain any cell openers, in particular any silicon oils, except for polyether polysiloxane copolymers, in particular except for polyalkylene oxide polydimethylsiloxane copolymers.

5. The method according to one or more of claims 1 to 3, **characterized in that** the single-component polyurethane adhesive consists of said ingredients.

6. The method according to one or more of claims 1 to 5, **characterized in that** 1 second to 30 minutes, preferably 2 seconds to 15 minutes, particularly preferably 5 seconds to 5 minutes, passes between the time when the application of the single-component polyurethane adhesive to at least one of the substrates to be bonded is completed and when the substrates to be bonded are subsequently pressed together.

7. A single-component polyurethane adhesive for use in a method according to one or more of claims 1 to 6, containing
- 30 to 70 % by weight, preferably 30 to 60 % by weight, of at least one compound comprising two or more, optionally masked, isocyanate groups,
- 20 to 60 % by weight, preferably 25 to 60 % by weight, particularly preferably 30 to 60 % by weight, of at least one compound comprising at least two hydroxy groups,
- 0.01 to 2.5 % by weight, preferably 0.02 to 1.25 % by weight, of at least one curing catalyst,
- 5 to 49.99 % by weight, preferably 7 to 40 % by weight, particularly preferably 8 to 30 % by weight of at least one propellant, and
- 0 to 10 % by weight, preferably 0.5 to 5 % by weight, of at least one foam stabilizer,
in each case based on the total weight of the single-component polyurethane adhesive, wherein the proportion of dimethyl ether and dimethoxymethane, based on the total amount of propellant contained, is at least 90 % by weight, and preferably 100 % by weight.

8. The single-component polyurethane adhesive according to claim 7, containing
- 30 to 70 % by weight, preferably 30 to 60 % by weight, of at least one compound comprising two or more, optionally masked, isocyanate groups,
- 20 to 60 % by weight, preferably 25 to 60 % by weight, particularly preferably 30 to 60 % by weight, of at least one compound comprising at least two hydroxy groups,
- 0.01 to 2.5 % by weight, preferably 0.02 to 1.25 % by weight, of at least one curing catalyst,
- 5 to 49.99 % by weight, preferably 7 to 40 % by weight, particularly preferably 8 to 30 % by weight of at least one propellant, and
- 0 to 10 % by weight, preferably 0.5 to 5 % by weight, of at least one polyether polysiloxane copolymer, in particular a polyalkylene oxide polydimethylsiloxane copolymer,
in each case based on the total weight of the single-component polyurethane adhesive, wherein the proportion of dimethyl ether and dimethoxymethane, based on the total amount of propellant contained, is at least 90 % by weight, and preferably 100 % by weight.

9. The single-component polyurethane adhesive according to one of claims 7 or 8, **characterized in that** the proportion of dimethyl ether, based on the total amount of propellant contained, is at least 90 % by weight, and preferably 100 % by weight.

10. The single-component polyethylene adhesive according to one or more of claims 7 to 9, **characterized in that** the single-component polyurethane adhesive does not contain any cell openers, in particular any silicon oils, except for polyether polysiloxane copolymers, in particular except for polyalkylene oxide polydimethylsiloxane copolymers.

11. The single-component polyurethane adhesive according to one or more of claims 7 to 9, **characterized in that** the single-component polyurethane adhesive consists of said ingredients.

## Revendications

1. Procédé de collage de substrats, comprenant au moins les étapes suivantes :
- application d'une colle polyuréthane monocomposante sur au moins un des substrats à coller, la colle polyuréthane monocomposante contenant au moins un agent propulseur choisi parmi le diméthyléther et le diméthoxyméthane, et étant appliquée depuis un récipient sous pression sous la forme d'une mousse, puis
- pression des substrats à coller l'un sur l'autre,
**caractérisé en ce que** :
- la teneur en diméthyléther et en diméthoxyméthane rapportée à la quantité totale d'agent propulseur qui les contient est d'au moins 90 % en poids et préférentiellement de 100 %, et
- la colle polyuréthane monocomposante contient :
• de 30 à 70 % en poids, préférentiellement de 30 à 60 % en poids d'au moins un composé avec au moins deux groupes isocyanates éventuellement protégés,
• de 20 à 60 % en poids, préférentiellement de 25 à 60 % en poids, particulièrement préférentiellement de 30 à 60 % en poids d'au moins un composé présentant au moins deux groupes hydroxy,
• de 0,01 à 2,5 % en poids, préférentiellement de 0,02 à 1,25 % en poids d'au moins un catalyseur de réticulation,
• de 5 à 49,99 % en poids, préférentiellement de 7 à 40 % en poids, particulièrement préférentiellement de 8 à 30 % en poids d'au moins un agent propulseur, et
• de 0 à 10 % en poids, préférentiellement de 0,5 à 5 % en poids d'au moins un stabilisateur de mousse,
chacun rapporté au poids total de la colle monocomposante.

2. Procédé selon la revendication 1, **caractérisé en ce que** la teneur en diméthyléther rapportée à la quantité totale d'agent propulseur qui le contient est d'au moins 50 % en poids, préférentiellement d'au moins 70 %, particulièrement préférentiellement d'au moins 90 % et tout particulièrement préférentiellement de 100 %.

3. Procédé selon l'une des revendications 1 à 2, **caractérisé en ce que** la colle monocomposante contient :
- de 30 à 70 % en poids, préférentiellement de 30 à 60 % en poids d'au moins un composé avec au moins deux groupes isocyanates éventuellement protégés,
- de 20 à 60 % en poids, préférentiellement de 25 à 60 % en poids, particulièrement préférentiellement de 30 à 60 % en poids d'au moins un composé présentant au moins deux groupes hydroxy,
- de 0,01 à 2,5 % en poids, préférentiellement de 0,02 à 1,25 % en poids d'au moins un catalyseur de réticulation,
- de 5 à 49,99 % en poids, préférentiellement de 7 à 40 % en poids, particulièrement préférentiellement de 8 à 30 % en poids d'au moins un agent propulseur, et
- de 0 à 10 % en poids, préférentiellement de 0,5 à 5 % en poids d'au moins un copolymère polyéther-polydiméthylsiloxane, en particulier d'un copolymère polyoxyde d'alkylène-polydiméthylsiloxane,
chacun rapporté au poids total de la colle monocomposante.

4. Procédé selon une ou plusieurs des revendications 1 à 2, **caractérisé en ce que** la colle monocomposante ne contient aucun agent d'ouverture de pores, en particulier aucune huile de silicone, excepté les copolymères polyéther-polysiloxane, en particulier les copolymères polyoxyde d'alkylène-polydiméthylsiloxane.

5. Procédé selon une ou plusieurs des revendications 1 à 3, **caractérisé en ce que** la colle monocomposante est constituée des ingrédients susmentionnés.

6. Procédé selon une ou plusieurs des revendications 1 à 5, **caractérisé en ce qu'**entre la fin de l'application de la colle monocomposante sur au moins un des substrats à coller et la pression des substrats à coller l'un contre l'autre, on attend entre 1 s et 30 min, préférentiellement entre 2 s et 15 min, particulièrement préférentiellement entre 5 s et 5 min.

7. Procédé selon l'une des revendications 1 à 6, **caractérisé en ce que** la colle monocomposante contient :
- de 30 à 70 % en poids, préférentiellement de 30 à 60 % en poids d'au moins un composé avec au moins deux groupes isocyanates éventuellement protégés,
- de 20 à 60 % en poids, préférentiellement de 25 à 60 % en poids, particulièrement préférentiellement de 30 à 60 % en poids d'au moins un composé présentant au moins deux groupes hydroxy,
- de 0,01 à 2,5 % en poids, préférentiellement de 0,02 à 1,25 % en poids d'au moins un catalyseur de réticulation,
- de 5 à 49,99 % en poids, préférentiellement de 7 à 40 % en poids, particulièrement préférentiellement de 8 à 30 % en poids d'au moins un agent propulseur, et
- de 0 à 10 % en poids, préférentiellement de 0,5 à 5 % en poids d'au moins un stabilisateur de mousse,
chacun rapporté au poids total de la colle monocomposante, la teneur en diméthyléther et en diméthoxyméthane rapportée à la quantité totale d'agent propulseur étant d'au moins 90 % en poids, et préférentiellement de 100 % en poids.

8. Colle polyuréthane monocomposante selon la revendication 7, contenant :
- de 30 à 70 % en poids, préférentiellement de 30 à 60 % en poids d'au moins un composé avec au moins deux groupes isocyanates éventuellement protégés,
- de 20 à 60 % en poids, préférentiellement de 25 à 60 % en poids, particulièrement préférentiellement de 30 à 60 % en poids d'au moins un composé présentant au moins deux groupes hydroxy,
- de 0,01 à 2,5 % en poids, préférentiellement de 0,02 à 1,25 % en poids d'au moins un catalyseur de réticulation,
- de 5 à 49,99 % en poids, préférentiellement de 7 à 40 % en poids, particulièrement préférentiellement de 8 à 30 % en poids d'au moins un agent propulseur, et
- de 0 à 10 % en poids, préférentiellement de 0,5 à 5 % en poids d'au moins un copolymère polyéther-polydiméthylsiloxane, en particulier d'un copolymère polyoxyde d'alkylène-polydiméthylsiloxane,
chacun rapporté au poids total de la colle monocomposante, la teneur en diméthyléther et en diméthoxyméthane rapportée à la quantité totale d'agent propulseur étant d'au moins 90 % en poids, et préférentiellement de 100 % en poids.

9. Colle polyuréthane monocomposante selon la revendication 7 ou 8, **caractérisée en ce que** la teneur en diméthyléther rapportée à la quantité totale d'agent propulseur qui le contient est d'au moins 90 % et préférentiellement de 100 %.

10. Colle polyuréthane monocomposante selon une ou plusieurs des revendications 7 à 9, **caractérisée en ce qu'**elle ne contient aucun agent d'ouverture de pores, en particulier aucune huile de silicone, excepté les copolymères polyéther-polysiloxane, en particulier les copolymères polyoxyde d'alkylène-polydiméthylsiloxane.

11. Colle polyuréthane monocomposante selon une ou plusieurs des revendications 7 à 9, **caractérisée en ce qu'**elle est constituée des ingrédients susmentionnés.
